# EUROPÄISCHE PATENTANMELDUNG

(11) **EP 3 851 415 A1**
(43) Veröffentlichungstag der Anmeldung: **21.07.2021**
(21) Anmeldenummer: 21151812.1
(22) Anmeldetag: 15.01.2021
(51) Int. Cl.: C02F 3/08, C02F 103/44, C02F 3/10

(54) **TRENNVORRICHTUNG UND VERFAHREN ZUM TRENNEN VON FESTSTOFFEN AUS EINEM FESTSTOFF-FLÜSSIGKEITS-GEMISCH**

(30) Priorität: 17.01.2020 DE 102020101027
(71) Anmelder: Beresa GmbH & Co. KG, 48155 Münster (DE)
(72) Erfinder: Horstkötter, Marko, 48317 Drensteinfurt / Rinkerode (DE)
(74) Vertreter: BSB Patentanwälte Schütte & Engelen Partnerschaft mbB

(57) **Zusammenfassung**

Trennvorrichtung (1) zur Entnahme von einem Feststoff-Flüssigkeits-Gemisch (50) aus dem Tank (101) einer Wasseraufbereitungsanlage (100), und zum Trennen von Feststoffen (51) aus dem Feststoff-Flüssigkeits-Gemisch (50), wobei die Feststoffe (51) Schaumstoffwürfel (52) und/oder andere Stoffe zur Oberflächenmaximierung umfassen, umfassend eine Trennkammer (2) zur Aufnahme von einem vorbestimmten Volumen von dem zu trennenden Feststoff-Flüssigkeits-Gemisch (50) mit einem Einlass (3), über welchen das zu trennende Feststoff-Flüssigkeits-Gemisch (50) der Trennkammer (2) zuführbar ist und wobei die Trennkammer (2) einen Auslass (4) umfasst, über welchen Flüssigkeit (52) des Feststoff-Flüssigkeits-Gemischs (50) ablassbar ist. Dabei ist dem Auslass (4) eine Siebeinrichtung (5) zugeordnet ist, welche die Feststoffe (51) in der Trennkammer (2) zurückhält. Bei dem Verfahren zum Trennen von Feststoffen (51) aus einem Feststoff-Flüssigkeits-Gemisch (50) aus einem Tank (101) einer Wasseraufbereitungsanlage (100), mit einer solchen Trennvorrichtung (1) wird zu trennendes Feststoff-Flüssigkeits-Gemisch (50) der Trennkammer (2) über den Einlass (3) zugeführt und Flüssigkeit (53) wird über den Auslass (4) der Trennkammer zurück in den Tank der Wasseraufbereitungsanlage geführt. Gleiches gilt für die Verwendung einer solchen Trennvorrichtung (1).

## Beschreibung

Die vorliegende Erfindung betrifft eine Trennvorrichtung zur Entnahme von einem Feststoff-Flüssigkeits-Gemisch aus dem Tank einer Wasseraufbereitungsanlage, insbesondere einer biologischen Wasseraufbereitungsanlage, und zum Trennen von Feststoffen aus dem Feststoff-Flüssigkeits-Gemisch, wobei die Feststoffe Schaumstoffwürfel und/oder andere Stoffe zur Oberflächenmaximierung umfassen. Dabei kommt die Trennvorrichtung vorzugsweise bei der Wartung, Reinigung und/oder dergleichen von Wasseraufbereitungsanlagen, insbesondere biologischen Wasseraufbereitungsanlagen, zum Einsatz. Die Trennvorrichtung umfasst wenigstens eine Trennkammer zur Aufnahme von einem vorbestimmten Volumen von dem zu trennenden Feststoff-Flüssigkeits-Gemisch mit wenigstens einem Einlass, über welchen das zu trennende Feststoff-Flüssigkeits-Gemisch der Trennkammer zuführbar ist. Weiterhin umfasst die Trennkammer wenigstens einen Auslass, über welchen Flüssigkeit des Feststoff-Flüssigkeits-Gemischs ablassbar ist. Die vorliegende Erfindung betrifft zudem ein Verfahren zum Trennen von Feststoffen aus einem Feststoff-Flüssigkeits-Gemisch aus einem Tank einer Wasseraufbereitungsanlage, insbesondere einer biologische Wasseraufbereitungsanlage, mit wenigstens einer solchen Trennvorrichtung, sowie die Verwendung einer solchen Trennvorrichtung für diese Zwecke.

Wasseraufbereitungsanlagen bzw. biologische Wasseraufbereitungsanlagen werden in vielen Bereichen eingesetzt. Insbesondere bei Autowaschanalgen, in Industrie- und/oder Hausklärgruben kann eine biologische Wasseraufbereitung vorgesehen sein.

Bei einer Autowaschanlage wird in z. B. in der Regel das beim Waschen des Autos verwendete Wasser recycelt. Dazu wird das gebrauchte Wasser über einen Schlammfang einem unterirdischen Tank bzw. Schacht zugeführt, in welchem eine biologische Wasseraufbereitung stattfindet.

In einem solchen Tank ist eine Vielzahl Schaumstoffwürfel bzw.. Filterschwämme vorgesehen, welche der Oberflächenmaximierung dienen und auf welchen sich die für die Aufbereitung des Wassers vorgesehen Bakterien ansiedeln.

Bei einem Volumen von ca. 10.000 l verschmutzten Wasser werden ca. 2-3 m³ Filterschwämme eingebracht. Das Volumen von einem einzelnen Schaumstoffwürfel beträgt ca. 0,00008 m³, somit sind in einem derartigen Tank ca. 250.000 Schaumstoffwürfel enthalten.

In dem Tank ist auf dem Boden eine Belüftung vorgesehen, um ein optimales Lebensumfeld für die Bakterien zu schaffen. Hierzu ist ein sogenanntes Lüfterkreuz mit Lüfterkerzen installiert. Diese Belüftung muss regelmäßig gereinigt werden. Dazu müssen die Schaumstoffwürfel aus dem Tank entfernt werden. Auch zur Reinigung des Tanks müssen die Schaumstoffschwämme entfernt werden. Zudem müssen die Schaumstoffwürfel von Zeit zu Zeit ersetzt werden.

Bisher werden diese Schaumstoffwürfel in der Regel händisch aus dem Tank gekeschert, was einen erheblichen Arbeits- und Zeitaufwand bedeutet. Das Entnehmen der Schaumstoffwürfel dauert je nach Anlagengröße einen ganzen Arbeitstag, wobei hierfür in der Regel auch noch zwei Personen benötigt werden. Dies ist ein großer Kostenfaktor für das Betreiben solcher Anlagen.

Es ist deshalb die Aufgabe der vorliegenden Erfindung, die Wartung einer Wasseraufbereitungsanlage zu vereinfachen und vorzugsweise zu beschleunigen und kostengünstiger zu gestalten.

Diese Aufgabe wird gelöst durch eine Trennvorrichtung mit den Merkmalen des Anspruchs 1, durch ein Verfahren zum Trennen von Feststoffen aus einem Feststoff-Flüssigkeits-Gemisch mit den Merkmalen von Anspruch 12 und durch eine Verwendung einer Trennvorrichtung mit den Merkmalen von Anspruch 15. Bevorzugte Weiterbildungen sind Gegenstand der Unteransprüche. Weitere Vorteile und Merkmale der vorliegenden Erfindung ergeben sich aus der allgemeinen Beschreibung und der Beschreibung der Ausführungsbeispiele.

Die erfindungsgemäße Trennvorrichtung eignet sich zur Entnahme von einem Feststoff-Flüssigkeits-Gemisch aus dem Tank einer Wasseraufbereitungsanlage, insbesondere einer biologischen Wasseraufbereitungsanlage, und zum Trennen von Feststoffen aus dem Feststoff-Flüssigkeits-Gemisch und dient zum Auftrennen eines Feststoff-Flüssigkeits-Gemisches, wobei die Feststoffe Schaumstoffwürfel und/oder andere Stoffe zur Oberflächenmaximierung umfassen und/oder sind. Dabei umfasst die Trenneinrichtung wenigstens eine Trennkammer zur Aufnahme von einem vorbestimmten Volumen von dem zu trennenden Feststoff-Flüssigkeits-Gemisch mit wenigstens einem Einlass, über welchen das zu trennende Feststoff-Flüssigkeits-Gemisch der Trennkammer zuführbar ist. Weiterhin umfasst die Trennvorrichtung wenigstens eine Pumpeneinrichtung, welche dazu geeignet und ausgebildet ist, das Feststoff-Flüssigkeits-Gemisch aus dem Tank in die Trennammer zu fördern. Zudem umfasst die Trennkammer wenigstens einen Auslass, über welchen die Flüssigkeit des Feststoff-Flüssigkeits-Gemisches ablassbar ist. Weiterhin ist dem Auslass wenigstens eine Siebeinrichtung mit wenigstens einer Sieböffnung zugeordnet, welche die Feststoffe in der Trennkammer zurückhält.

Die aus dem Auslass abfließende Flüssigkeit wird vorzugsweise direkt oder je nach Ausgestaltung auch indirekt in den Tank zurückgeführt.

Die erfindungsgemäße Trennvorrichtung eignet sich insbesondere für den Einsatz in Bezug auf Wasseraufbereitungsanlagen, insbesondere biologische Wasseraufbereitungsanlagen aber vorzugsweise auch für den Einsatz in Bezug auf Industrieklärgruben und Hausklärgruben.

Dabei werden insbesondere Schaumstoffwürfel, welche zur Oberflächenmaximierung bzw. als biologisches Trägermaterial in einen Tank einer Wasseraufbereitungsanlage eingebracht sind, aus dem Feststoff-Flüssigkeits-Gemisch herausgesiebt. Dies wird vorzugsweise dann gemacht, wenn die Wasseraufbereitungsanlage gereinigt und/oder gewartet werden muss oder wenn die Oberflächenbeschaffenheit der Schaumstoffwürfel nicht mehr die gewünschte Qualität aufweist oder die Biologie in der Anlage umgekippt ist, und die Schaumstoffwürfel somit ersetzt werden müssen.

Dabei kann eine solche Wasseraufbereitungsanlage insbesondere bei Waschanlagen vorgesehen sein, wobei das Wasser zum Waschen der Autos recycelt wird, wozu eine Wasseraufbereitungsanlage, insbesondere eine biologische Wasseraufbereitungsanlage, vorgesehen sein kann.

Dabei sind in einem Tank einer Wasseraufbereitungsanlage je nach Ausgestaltung ca. 1 bis 5 m³ Schaumstoffwürfel enthalten. Wenn eine Entsorgung bzw. ein Austausch der Schaumstoffwürfel notwendig ist, wenn eine Wartung der Wasseraufbereitungsanlage erfolgen soll oder auch eine Havarie der Anlage vorliegt, wenn beispielsweise die Biologie in der biologischen Wasseraufbereitungsanlage umkippt, ist es nötig, die Schaumstoffwürfel aus dem Feststoff-Flüssigkeits-Gemisch zu entnehmen.

Beim Austausch der Schaumstoffwürfel können neue Schaumstoffwürfel dann in die zurückgeführte Flüssigkeit eingebracht werden. Bei einer Wartung der Wasseraufbereitungsanlage kann das getrennte Wasser bzw. die getrennte Flüssigkeit je nach Ausgestaltung und Qualität der Flüssigkeit auch in das Ortsnetz entsorgt werden.

Der Einlass der Trennkammer ist vorzugsweise im oberen Bereich der Trennkammer vorgesehen. Der Auslass der Trennkammer ist insbesondere im unteren Bereich der Trennkammer vorgesehen. So wird es möglich, dass das zu trennende Feststoff-Flüssigkeits-Gemisch von oben in die Trennkammer eingefüllt wird, wobei die Feststoffe bzw. die Schaumstoffwürfel oder dergleichen durch die Siebeinrichtung zurückgehalten werden. Durch den Auslass läuft dann die Flüssigkeit vorzugsweise unmittelbar zurück in den Tank der Wasseraufbereitungsanlage.

Hierdurch kommt es zu einer Zirkulation der Flüssigkeit, diese läuft immer wieder zurück, sodass der Pegel in dem Schacht bzw. dem Tank und der Flüssigkeitspegel in der Trennkammer nahezu immer gleich bleibt.

Zum Einbringen von Flüssigkeitsfeststoff-Flüssigkeits-Gemisch in die Trennkammer kann insbesondere ein Schlauch oder dergleichen an den Einlass angeschlossen oder in den Einlass eingehängt werden oder in einer anderen geeigneten Art und Weise mit dem Einlass in Wirkverbindung gebracht werden.

Der Auslass kann vorzugsweise mit einem Schlauch oder dergleichen verbunden werden, sodass dieser zurück in den Schacht geleitet werden kann. Die Trennkammer kann auch derart positioniert werden, dass der Auslass oberhalb der Öffnung des Tanks bzw. des Schachts der Wasseraufbereitungsanlage angeordnet ist, sodass rückfließende Flüssigkeit automatisch zurück in den Tank läuft.

Die erfindungsgemäße Trennvorrichtung bietet viele Vorteile. Ein erheblicher Vorteil ist, dass durch die erfindungsgemäße Trennvorrichtung eine einfache, kostengünstige und vorzugsweise durch eine Person bedien- und installierbare Trennvorrichtung zur Verfügung gestellt wird, um die Feststoffe bzw. Schaumstoffwürfel aus dem Feststoff-Flüssigkeits-Gemisch einer Wasseraufbereitungsanlage zu entnehmen.

Dies wird dadurch möglich, dass das Feststoff-Flüssigkeits-Gemisch der Trennkammer zugeführt wird, wobei die Feststoffe bzw. Schaumstoffwürfel durch die Siebeinrichtung in der Trennkammer zurückgehalten werden. Durch den Auslass fließt die getrennte Flüssigkeit aus dem Feststoff-Flüssigkeits-Gemisch ab, wobei diese insbesondere direkt wieder zurück in den Tank einer Wasseraufbereitungsanlage geleitet wird.

Da die Flüssigkeit direkt wieder durch den Auslass zurückgeleitet wird, kann eine relativ kleine Trennkammer vorgesehen werden, da nur die Schaumstoffwürfel in der Trennkammer verbleiben. Je nach Ausgestaltung und Größe der Trennkammer kann diese auch bei maximaler Befüllung mit Schaumstoffwürfel durch eine neue Trennkammer ausgetauscht werden, sodass das Gesamtvolumen an Schaumstoffwürfeln auf mehrere Trennkammern aufgeteilt werden kann. So kann eine Einmannbedienung bzw. Installation durch eine Person auch bei relativ einem großen Schwammvolumen einer Wasseraufbereitungsanlage erreicht werden.

Bevorzugt ist die Siebeinrichtung wenigstens abschnittsweise und insbesondere vollständig innerhalb der Trennkammer angeordnet. Vorzugsweise ist die Siebeinrichtung also dem Auslass vorgeschaltet. Dabei ist insbesondere der siebende Bereich der Siebeinrichtung im Wesentlichen vollständig innerhalb der Trennkammer angeordnet.

Besonders bevorzugt umfasst die Siebeinrichtung wenigstens ein Siebrohr. Ein solches Siebrohr kann durch ein Rohr, ein rohrartiges Element oder aber auch durch einen Schlauch oder dergleichen zur Verfügung gestellt werden. Dabei kann je nach Ausgestaltung eine eher stabilere bzw. festere bzw. nichtflexible Ausgestaltung des Siebrohrs vorteilhaft sein.

Die Siebeinrichtung umfasst in zweckmäßigen Weiterbildungen wenigstens ein Siebrohr und wenigstens ein Gewinde bzw. einen Gewindeverschluss mit welchem die Siebeinrichtung vorzugsweise an den Auslass befestigt werden kann.

Vorzugseise ist die Siebeinrichtung dazu geeignet und ausgebildet, in und/oder an den Auslass gesteckt, geschraubt gekliptst, geklebt oder anders damit verbunden zu werden.

Dabei ist insbesondere bevorzugt, dass die Siebeinrichtung wenigstens eine Verbindungseinrichtung zum Verbinden der Siebeinrichtung mit dem Auslass umfasst. So wird es möglich, dass die Siebeinrichtung lösbar bzw. wechselbar vorgesehen ist, sodass sie zwischen unterschiedlichen bzw. mehreren Trennkammer ausgetauscht werden kann und/oder für den Transport und/oder die Lagerung der Trenneinrichtung und/oder eine andere Verwendung der Trennkammer entfernt werden kann. Dabei ist insbesondere bevorzugt, dass die Siebeinrichtung von außerhalb der Trennkammer durch den Auslass in die Trennkammer einführbar ist, und anschließend vorzugsweise mit dem Auslass oder anders mit der Trennkammer verbunden wird. So wird es möglich, die Siebeinrichtung auch bei mit Schaumstoffwürfeln gefüllter Trennkammer leicht und einfach von außen zu entnehmen, beispielsweise an einer weiteren Trennkammer zuzuführen.

Besonders bevorzugt ist der Querschnitt der wenigstens einen Sieböffnung an die Ausmaße der zu trennenden Feststoffe angepasst. Insbesondere ist eine möglichst große Öffnung vorteilhaft, sodass der Rückfluss von Flüssigkeiten möglichst schnell erfolgen kann und trotzdem die Feststoffe bzw. Schaumstoffwürfel zurückgehalten werden. Beispielsweise bei Schaumstoffwürfeln von 2 x 2 cm Kantenlänge kann eine 12 mm Bohrung als Sieböffnung vorteilhaft sein. Auch alle anderen möglichen Größen und Konturen von Sieböffnungen können vorteilhaft verwendet werden, solange die Schaumstoffwürfel zurückgehalten werden.

In zweckmäßigen Ausgestaltungen ist dem Einlass wenigstens ein Einlasselement zugeordnet. Ein solches Einlasselement kann beispielsweise ein rohrartiges Element umfassen, welches z. B. mit dem Anschluss für einen Schlauch bzw. eine Kupplung wie beispielsweise eine Storz-Kupplung zum Anschluss von Schläuchen aufweist. Zusätzlich kann beispielsweise auch ein Deckel bzw. ein Gewindedeckel vorgesehen sein, um das Einlasselement mit dem Einlass zu verbinden bzw. zu verschrauben. Dies ist insbesondere dann vorteilhaft, wenn ein standardisierter IBC-Tank verwendet werden soll und z. B. der obere Einlass des IBC-Tanks für das Einfüllen von Feststoff-Flüssigkeits-Gemisch genutzt werden soll.

Bevorzugt ist wenigstens ein Füllstandsensor vorgesehen. Insbesondere ist ein solcher Füllstandsensor in der Trennkammer vorgesehen. Je nach Ausgestaltung kann ein Füllstandsensor auch außerhalb der Trennkammer vorgesehen sein, welcher den Füllstand in dem Tank der Wasseraufbereitungsanlage überwacht. Insbesondere wenn ein Füllstandsensor innerhalb der Trennkammer vorgesehen bzw. angeordnet ist, kann ein Rohr bzw. eine rohrartige Struktur vorgesehen sein, in welcher der Füllstandsensor angeordnet ist. Hiermit kann eine direkte Kontaktierung von Schaumstoffwürfeln und der Sensoreinrichtung verhindert werden, sodass ein versehentliches ausschalten einer optional vorgesehenen Pumpeneinrichtung zum Einfüllen von Flüssigkeits-Feststoff-Gemisch verhindert wird.

In zweckmäßigen Ausgestaltungen ist wenigstes eine Halteeinrichtung vorgesehen, welche insbesondere vorbelastet den Füllstandsensor bzw. die rohrartiges Struktur halten kann. Dabei ist bevorzugt in dem Einlasselement wenigstens eine Öffnung vorgesehen, durch welche der Füllstandsensor von außen in die Trennkammer eingeführt werden kann, wobei die Halteeinrichtung dann an der Öffnung angeordnet bzw. dort befestigt ist. So kann dann auf einfache Art und Weise zum Beispiel beim Wechsel der Trennkammer oder auch bei der Installation das Einlasselement zusammen mit der Halteeinrichtung und dem Füllstandsensor installiert oder umgebaut werden.

Besonders bevorzugt ist wenigstens eine Pumpeneinrichtung vorgesehen. Dabei ist insbesondere eine Pumpenrichtung vorgesehen, um das Feststoff-Flüssigkeits-Gemisch über den Einlass in die Trennkammer zu fördern. Dabei umfasst die Pumpeneinrichtung insbesondere wenigstens eine Pumpe und alle weiteren notwendigen Bauteile wie beispielsweise Anschlüsse, Schläuche und weitere eventuell notwendige Bauteile. Die Pumpeneinrichtung bzw. die Pumpe der Pumpeneinrichtung kann z. B. bevorzugt mit einem Seil, einer Kette oder dergleichen an der Trennkammer befestigt werden und insbesondere höhenverstellbar vorgesehen sein, sodass diese optimal in dem Tank einer Wasseraufbereitungsanlage angeordnet werden kann.

Besonders bevorzugt wird die Trennkammer durch wenigstens einen IBC-Tank oder dergleichen zur Verfügung gestellt. Dabei kann prinzipiell jeder beliebiger Tank bzw. jedes Gefäß in einer geeigneten Größe als Trennkammer verwendet werden. IBC-Tanks sind jedoch in der Regel leicht verfügbar und können sowohl in der Größe von 600 l, 800 l oder auch1000 l verwendet werden. Selbst ein großer 1000 l IBC-Tank passt in der Regel in einen geeigneten Transporter und kann von einer Person leer und auch mit Schaumstoffwürfeln befüllt alleine bewegt und eingeladen werden. Zudem weisen IBC-Tanks bereits vorgefertigte Öffnungen als Einlass und Auslass mit Gewinde auf, sodass auch hier auf einfache Art und Weise eine Trennkammer realisiert werden kann, sodass dann an den Einlass und Auslass des IBC-Tanks die Siebeinrichtung und das Einlasselement angeschraubt werden können.

Vorzugsweise umfasst die Trennkammer wenigstens eine Öffnung zum Entnehmen der Feststoffe auf. Dabei ist die Öffnung insbesondere im oberen Bereich der Trennkammer als große Öffnung vorgesehen bzw. eine Öffnung in der Größe, dass die Schaumstoffwürfel durch das Umkippen der Trennkammer leicht, schnell und einfach wieder entleert werden können. Insbesondere ist diese Trennkammer mit einer Abdeckung versehen, welche insbesondere als klappbares und/oder abnehmbares Gitter oder dergleichen ausgebildet ist. Dabei ist dies insbesondere vorteilhaft, wenn eine Restentleerungsbeziehung bzw. eine vollständige Entleerung der Wasseraufbereitungsanlage gewünscht ist. Dann kann auch bei abgelassenem Wasser aus dem Tank der Wasseraufbereitungsanlage beispielsweise mit einem Gebläse die Restmenge an Schaumstoffwürfeln in die Trennkammer eingeblasen werden, ohne dass in der Trennkammer schon befindliche Schaumstoffwürfel aus der Öffnung zum Entnehmen der Feststoffe aus der Trennkammer fallen.

Allgemein ist vorzugsweise eine mobile Ausgestaltung vorgesehen. Dabei ist diese Anlage insbesondere nicht fest installiert, und vorzugsweise kleinbauend und/oder zerlegbar ausgebildet. Dabei sollte die Trennvorrichtung insbesondere in einem Auto bzw. einem Transporter transportiert werden können und vorzugsweise von einer Person alleine aufgebaut, bewegt, bedient und transportiert werden können.

In zweckmäßigen Weiterbildungen ist wenigstens eine Presseinrichtung in der Trennkammer vorgesehen. Diese Presseinrichtung kann insbesondere die Restmenge an Flüssigkeit aus den Schaumstoffwürfeln auspressen. Dazu kann beispielsweise eine verschiebbare Platte in der Trennkammer angeordnet sein, welche die Schaumstoffwürfel bei einer Verlagerung der Platte gegen eine Wandung der Trennkammer drückt.

Bevorzugt ist wenigstens eine Steuereinrichtung vorgesehen. Eine derartige Steuereinrichtung kann insbesondere in Verbindung mit dem Füllstandsensor eine eventuell vorgesehene Pumpe ansteuern. Dabei kann insbesondere eine Technikplattform vorgesehen sein, welche beispielsweise bei der Verwendung eines IBC-Tanks auf diesen zurechtgeschnitten sein kann und dann gemäß dieser Anmeldung als IBC-Desk des bezeichnet wird. Diese Plattform kann z. B. einfach zwischen Rahmen und Tank des IBC-Tanks gesteckt werden. An einer solchen Plattform bzw. einem IBC-Desk kann beispielsweise auch eine Öse zur Befestigung der Pumpe vorgesehen sein. Die Steuereinrichtung kann dann beispielsweise vorzugsweise zusammen mit anderen Materialien wie z. B. einer Dokumentation auf dem IBC-Desk abgelegt werden.

Das erfindungsgemäße Verfahren zum Trennen von Feststoffen aus einem Feststoff-Flüssigkeits-Gemisch aus einem Tank einer Wasseraufbereitungsanlage, insbesondere einer biologischen Wasseraufbereitungsanlage und erfolgt unter Nutzung einer Trennvorrichtung, wie sie zuvor beschrieben wurde. Dabei ist das Verfahren gekennzeichnet durch die folgenden Schritte in geeigneter Reihenfolge. Es wird zu trennendes Feststoff-Flüssigkeits-Gemisch entnommen und der Trennkammer über den Einlass zugeführt. Es erfolgt die Rückführung der mittels der Siebeinrichtung abgetrennten Flüssigkeit über den Auslass der Trennkammer in den Tank der Wasseraufbereitungsanlage.

Dabei wird insbesondere über die Siebeinrichtung der Feststoffanteil der Feststoff-Flüssigkeits-Gemisches bzw. es werden insbesondere die Schaumstoffwürfel zurückgehalten. Die Flüssigkeit läuft vorzugsweise automatisch und unmittelbar zurück in den Tank bzw. Schacht der Wasseraufbereitungsanlage.

Auch das erfindungsgemäße Verfahren bietet die Vorteile, wie sie zuvor schon zu der Trennvorrichtung ausgeführt wurden. Insbesondere wird eine einfach konstruierte und leicht zu befördernde und zu bedienende Trennvorrichtung zur Verfügung gestellt.

Dabei ist insbesondere eine relativ kleine Trennkammer realisierbar, da die Flüssigkeit aus dem Feststoff-Flüssigkeits-Gemisch unmittelbar in den Tank zurückgeführt wird.

Neben einfach aufgebauten Trennvorrichtung kann die benötigte Zeit zum Entnehmen der Schaumstoffwürfel erheblich reduziert werden. Das Trennen der Schaumstoffwürfel kann von einer Person alleine durchgeführt werden und dauert nur noch einen Bruchteil der Zeit im Vergleich zu dem sonst händisch mit Keschern erfolgenden Entnehmen der Schaumstoffschwämme.

Bevorzugt erfolgt das Zuführen von dem Feststoff-Flüssigkeits-Gemisch mittels wenigstens einer Pumpe. Die Rückführung erfolgt insbesondere passiv. Dabei läuft die Flüssigkeit aus dem Feststoff-Flüssigkeits-Gemisch insbesondere direkt durch den Auslass oder aber über einen Schlauch zurück in den vorzugsweise unterirdischen Tank einer Wasseraufbereitungsanlage. Wenn der Tank nicht unterhalb des Auslasses der Feststoffe angeordnet ist oder die Wasseraufbereitungsanlage bzw. der Tank nicht unterirdisch angeordnet ist oder auch allgemein kann auch die Rückführung über eine Pumpe erfolgen.

Besonders bevorzugt umfasst das Verfahren den Schritt der Höhenjustierung der Pumpeneinrichtung in dem Tank der Wasseraufbereitungsanlage an geeigneter Stelle. Da die Flüssigkeit unmittelbar wieder aus dem Auslass der Trennkammer zurück in Tank läuft, muss in der Regel die Pumpenhöhe nicht nachjustiert werden. Sollte dies jedoch einmal notwendig werden, kann die Pumpenhöhe innerhalb des Tanks automatisch oder auch manuell nachjustiert werden.

Besonders bevorzugt umfasst das Verfahren die folgenden Schritte an geeigneter Stelle und in geeigneter Anzahl. Es wird die Siebeinrichtung und/oder das Einlasselement aus einer mit Schaumstoffwürfeln insbesondere vollständig gefüllten Trennkammer entnommen. Eine leere bzw. neue Trennkammer wird vorbereitet. Die Siebeinrichtung und/oder das Einlasselement werden in die neue Trennkammer eingesetzt. Anschließend erfolgt insbesondere das erneute Zuführen von zu trennendem Feststoff-Flüssigkeits-Gemisch in die Trennkammer über den Einlass und die Rückführung der Flüssigkeit über den Auslass der Trennkammer.

Insbesondere bei der mobilen Ausgestaltung einer erfindungsgemäßen Trennvorrichtung kann das zur Verfügung stehende Volumen der Trennkammer nicht ausreichend sein, um das Gesamtvolumen der zu entnehmenden Schaumstoffwürfel aufzunehmen. Dann kann es notwendig werden, wenigstens eine weitere Trennkammer zu verwenden. Damit man nicht jede Trennkammer mit einem ein Einlasselement und/oder einer Siebeinrichtung ausrüsten muss, sind diese insbesondere entnehmbar und insbesondere von außen entnehmbar vorgesehen, sodass diese nach dem Befüllen einer Trennkammer aus dieser Trennkammer entnommen werden und einer weiteren Trennkammer zugeführt werden können. So ist es beispielsweise je nach Anlagengröße notwendig, mindestens 2 bis 3 IBC-Tanks mit einem Volumen von 1000 l vorzusehen, um alle Schaumstoffwürfel aus dem Tank der Wasseraufbereitungsanlage zu entnehmen.

Erfindungsgemäß ist auch die Verwendung einer Trennvorrichtung wie sie zuvor beschrieben wurde für das Trennen von Feststoffen bzw. Schaumstoffwürfeln und/oder anderen Stoffen zur Oberflächenmaximierung aus dem Feststoff-Flüssigkeits-Gemisch aus dem Tank einer Wasseraufbereitungsanlage, insbesondere einer biologischen Wasseraufbereitungsanlage, vorgesehen. Dabei werden die Schaumstoffwürfel in der Trennkammer durch die Siebeinrichtung zurückgehalten und die Flüssigkeit wenigstens teilweise und wenigstens zeitweise über den Auslass in den Tank zurückgeführt.

Dabei ist insbesondere die Verwendung einer solchen Trennvorrichtung bei der Wartung, bzw. Reinigung bzw. dem Austausch der Schaumstoffwürfel bevorzugt. Insbesondere kann eine derartige Wasseraufbereitungsanlage bei einer Waschanlage vorgesehen sein und die Trennvorrichtung dementsprechend in Waschanlagen verwendet werden.

Weitere Vorteile und Merkmale der vorliegenden Erfindung ergeben sich aus den Ausführungsbeispielen, welche nachfolgend mit Bezug auf die beiliegenden Figuren erläutert werden.

In den Figuren zeigen:
- Fig. 1: eine rein schematische Darstellung einer Waschanlage mit einer erfindungsgemäßen Trennvorrichtung;
- Fig. 2: eine rein schematische Darstellung einer erfindungsgemäßen Trennvorrichtung in einer Schnittansicht von Seite;
- Fig. 3: eine rein schematische Darstellung eines weiteren Ausführungsbeispiels einer erfindungsgemäßen Trennvorrichtung in einer perspektivischen Ansicht;
- Fig. 4: eine rein schematische Darstellung einer Siebeinrichtung eines Ausführungsbeispiels einer erfindungsgemäßen Trennvorrichtung in einer Schnittansicht und zwei perspektivischen Vergrößerungen;
- Fig. 5: eine rein schematische Darstellung eines Einlasselements eines Ausführungsbeispiels einer erfindungsgemäßen Trennvorrichtung in einer perspektivischen Ansicht von der Seite;
- Fig. 6: eine weitere rein schematische Darstellung eines Einlasselements eines Ausführungsbeispiels einer erfindungsgemäßen Trennvorrichtung in einer perspektivischen Ansicht von oben;
- Fig. 7: eine rein schematische Darstellung eines Füllstandsensors für eine erfindungsgemäße Trennvorrichtung in einer perspektivischen Ansicht von der Seite;
- Fig. 8: eine rein schematische Darstellung einer Plattform für eine erfindungsgemäße Trennvorrichtung in einer perspektivischen Ansicht von schräg oben; und
- Fig. 9: eine rein schematische Darstellung einer Plattform für eine erfindungsgemäße Trennvorrichtung in einer perspektivischen Ansicht von der Seite.

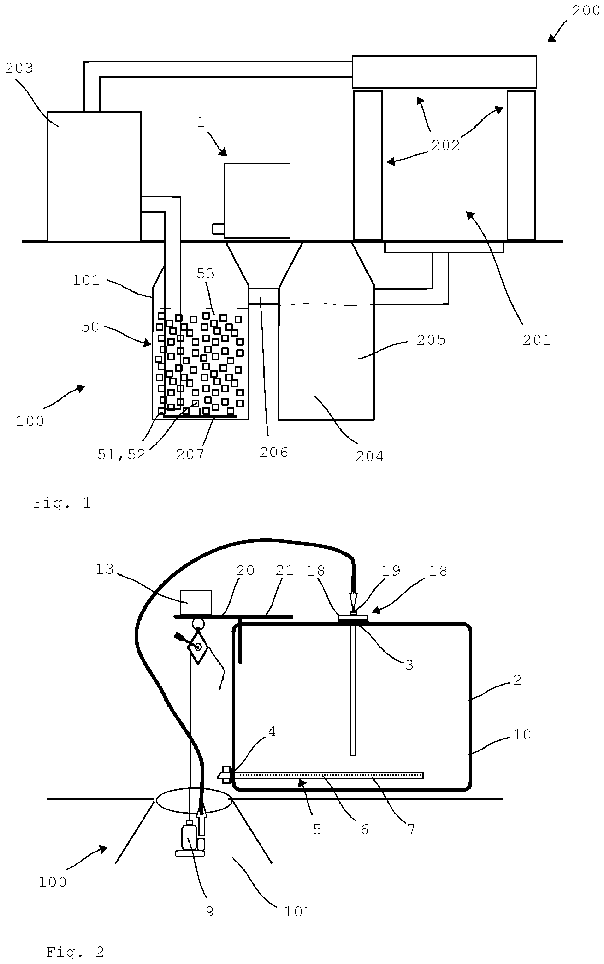

In Figur 1 ist rein schematisch eine Autowaschanlage bzw. eine Portalwaschanlage 200 dargestellt, welche eine Wasseraufbereitungsanlage 100 bzw. eine biologische Wasseraufbereitungsanlage 100 umfasst.

Die Portalwaschanlage 200 umfasst einen Waschbereich 201 für Autos, in welchem mehrere rotierende Bürsten 202 angeordnet sind. Das zum Waschen benötigte Wasser wird der Portalwaschanlage bzw. dem Waschbereich 201 über ein Pumpenhaus bzw. Technikhaus 203 zugeleitet.

Das beim Waschen des Autos verwendete Wasser läuft nach unten weg und wird einem ersten hier unterirdischen Tank bzw. Schacht 204 zugeführt, welcher als Schlammfang 205 fungiert. An diesem Schlammfang 205 ist ein Überlauf 206 vorgesehen, über welchen Wasser in einen zweiten Tank 101 bzw. Schacht überläuft, welcher zur biologischen Wasseraufbereitung verwendet wird.

In den Tank 101 ist eine Vielzahl von Feststoffen 51 vorgesehen, welche der Oberflächenmaximierung dienen und in dem hier gezeigten Ausführungsbeispiel durch Schaumstoffwürfel 52 bzw. Filterschwämme zur Verfügung gestellt werden. Diese Schaumstoffwürfel 52 bzw. Stoffe zur Vergrößerung der Oberfläche dienen dazu, von den zur biologischen Wasseraufbereitung vorgesehen Bakterien besiedelt zu werden. Dabei fasst der hier gezeigte Tank 101 ca. 10.000 l verschmutztes Wasser, wobei ca. 2-3 m³ Filterschwämme in ein derartiges Volumen eingebracht sind. Das Volumen von einem einzelnen Schaumstoffwürfel beträgt ca. 0,00008 m³, somit sind in einem derartigen Tank ca. 250.000 Schaumstoffwürfel enthalten.

Um den in dem Tank 101 vorhandenen und auf den Schaumstoffwürfeln 52 angesiedelten Bakterien ein möglichst optimales Umfeld zu bieten, um das verschmutzte Wasser biologisch aufzubereiten, ist im unteren Bereich des Schachtes 101 ein sogenanntes Lüfterkreuz 207 vorgesehen, welches in Figur 1 nicht näher dargestellt ist. Über dieses Lüfterkreuz 207 wird Sauerstoff bzw. Luft in die Anlage bzw. in die Flüssigkeit in dem Schacht 101 eingebracht.

Ein solches Lüfterkreuz 207 muss ca. alle 3 bis 4 Jahre gewartet werden, was eine Restentleerung des Tanks bzw. Schachts 204 voraussetzt. Spätestens zu einem solchen Zeitpunkt müssen die Schaumstoffwürfel getrennt von dem verschmutzten Wasser aus dem Tank entnommen werden. Auch beim Austausch der Schaumstoffwürfel 52, wenn diese beispielsweise verschlissen sind und keine ausreichende Oberfläche mehr zur Verfügung stellen oder allgemein zu Wartung und Reinigung, müssen die Schaumstoffwürfel 52 aus dem Feststoff-Flüssigkeits-Gemisch 50 entnommen werden. Eine Entsorgung der Schwämme zusammen mit der Flüssigkeit wäre viel zu teuer. Herkömmlich wurden diese Schaumstoffwürfel 50 händisch aus dem Tank gekeschert, was einen erheblichen Arbeits- und Zeitaufwand bedeutet.

Erfindungsgemäß ist eine Trennvorrichtung 1 vorgesehen, über welche die Filterschwämme bzw. Schaumstoffwürfel 52 schnell, einfach und in dem gezeigten Ausführungsbeispiel durch nur eine Person aus dem Schacht 101 entnommen werden können, wobei das verschmutzte Wasser bzw. die Flüssigkeit 53 aus dem Feststoff-Flüssigkeits-Gemisch 50 getrennt wird.

Aufbau und die Funktionsweise der Trennvorrichtung Einzel sind in den nachfolgenden Figuren beschrieben.

In Figur 2 ist eine erfindungsgemäße Trenneinrichtung 1 in einer rein schematischen Schnittansicht dargestellt. Die erfindungsgemäße Trennvorrichtung 1 umfasst eine Trennkammer 2, in welcher ein vorbestimmtes Volumen von zu trennendem Feststoff-Flüssigkeits-Gemisch 50 aufgenommen werden kann.

Um das Feststoff-Flüssigkeits-Gemisch 50 der Trennkammer 2 zuzuführen, ist ein Einlass 3 vorgesehen, welcher hier im oberen Bereich der Trennkammer 2 angeordnet ist. Im unteren Bereich der Trennkammer 2 ist ein Auslass 4 vorgesehen, wobei an dem Auslass 4 eine Siebeinrichtung 5 vorgesehen ist, welche ein Siebrohr 7 mit einer Vielzahl von Sieböffnungen 6 umfasst.

Über diese Siebeinrichtung 5 werden die in die Trennkammer 2 eingeführten Feststoffe 51 bzw. die Schaumstoffwürfel 52 zurückgehalten und die Flüssigkeit 53 aus dem Feststoff-Flüssigkeits-Gemisch 50 fließt direkt zurück in den Schacht 101 der Wasseraufbereitungsanlage 100. Dadurch kann das Gesamtvolumen der Trennkammer 2 relativ gering gehalten werden.

In dem gezeigten Ausführungsbeispiel ist an dem Einlass 3 ein Einlasselement 14 vorgesehen, welches hier einen mit dem Einlass 3 verschraubbaren Deckel 18 aufweist. Die beispielhafte Ausgestaltung eines solchen Einlasselements 14 ist in den nachfolgenden Figuren genauer dargestellt.

An dem Deckel 18 ist hier eine Kupplung 19 vorgesehen, an welche ein Schlauch angeschlossen werden kann. Über diesen Schlauch wird mittels einer Pumpeneinrichtung 9 zu trennendes Feststoff-Flüssigkeits-Gemisch 50 aus dem Tank 101 der Trennkammer 2 zugeführt. Als Trennkammer 2 ist in dem hier gezeigten Ausführungsbeispiel ein herkömmlicher IBC-Tank 10 vorgesehen, welcher einen Auslass 4 mit einem Gewinde aufweist, auf welchen in dem gezeigten Ausführungsbeispiel die Siebeinrichtung 5 aufgeschraubt ist.

Durch die erfindungsgemäße Trennvorrichtung 1 und das erfindungsgemäße Verfahren zum Trennen von Feststoffen 51 insbesondere von Schaumstoffwürfeln 52 aus einem Feststoff-Flüssigkeits-Gemisch 50 einer Wasseraufbereitungsanlage 100 können die Kosten zur Wartung, Reinigung und/oder Neubefüllung der Wasseraufbereitungsanlage 100 erheblich reduziert werden.

Dies resultiert daraus, dass im Vergleich zu dem herkömmlichen Entfernen der Schaumstoffwürfel 52 mit Keschern durch in der Regel wenigstens zwei Personen die benötigte Zeit zum Entnehmen der Schaumstoffwürfel 52 erheblich reduziert werden kann. Die kommt dadurch, dass die Schaumstoffwürfel 53 mittels der Pumpe in die Trennkammer 2 gefördert und dort durch die Siebeinrichtung 5 zurückgehalten werden und die Flüssigkeit 53 unmittelbar zurück in den Tank 101 läuft.

Je nach Ausgestaltung kann es dann möglich werden, dass die Trennkammer 2 gewechselt werden muss, wenn das vorhandene Aufnahmevolumen vollständig mit Schaumstoffwürfeln 52 bzw. Filterschwämmen gefüllt ist. Dadurch dass das Einlasselement 14 und die Siebeinrichtung 5 schraub- bzw. entnehmbar an der Trennkammer 2 bzw. hier an den IBC-Tank 10 vorgesehen sind, kann ein Benutzer einfach eine leere Trennkammer 2 bzw. einen leeren IBC-Tank 10 vor die Öffnung des Tanks 101 schieben, die Siebeinrichtung 5 und das Einlasselement 14 einsetzen und den Trennvorgang weiter fortsetzen.

Dadurch, dass hier je nach Ausgestaltung im Wesentlichen Standardkomponenten, insbesondere ein IBC-Tank 10 als Trennkammer 2, verwendet werden können, werden die Kosten für die eine erfindungsgemäße Trennvorrichtung 1 erheblich reduziert. IBC-Tanks 10 stehen in der Regel auf einem Firmengelände zu Verfügung und/oder können zumindest schnell besorgt werden. Insbesondere können diese Art von Tanks 10 bzw. Trennkammern 2 leicht durch eine Person transportiert und aufgebaut werden, selbst wenn die großen Tanks mit 1000 l Fassungsvermögen verwendet werden.

In Figur 2 ist weiterhin dargestellt, dass an der Trennkammer 2 eine Plattform 20 vorgesehen ist, welche erfindungsgemäß als IBC-Desk 21 bezeichnet wird.

Diese Plattform 20 ist hier derart ausgebildet, dass sie zwischen Tank und Gestänge von einem IBC-Tank 10 einfach eingesteckt werden kann. An diese Plattform 20 bzw. das IBC-Desk 21 kann die Pumpeneinrichtung angehängt werden, es kann eine Steuereinrichtung 13 aufgestellt und auch beispielsweise eine Anleitung zum Bedienen der Trennvorrichtung 1 auf das IBC-Desk abgelegt werden.

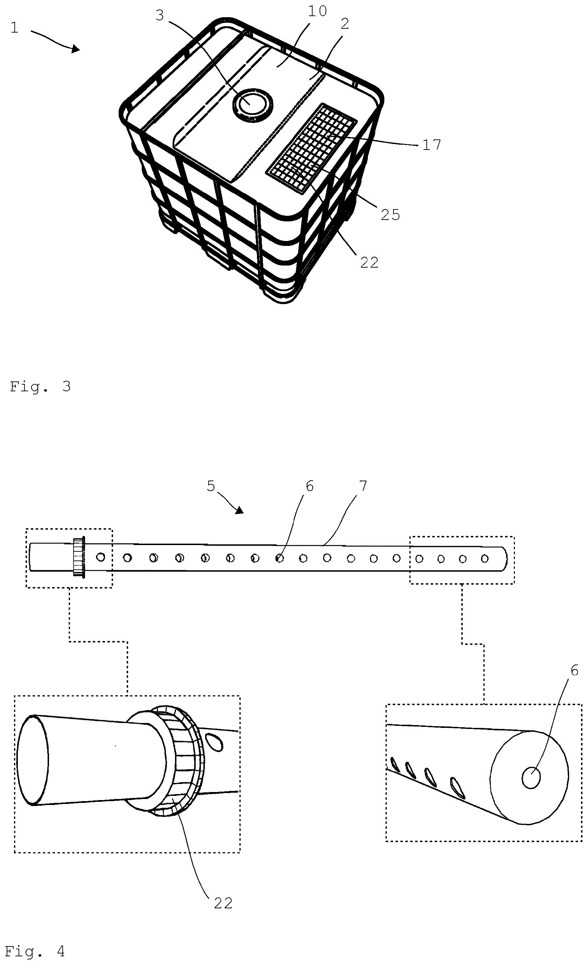

In Figur 3 ist die Trennkammer 2 einer erfindungsgemäßen Trennvorrichtung 1 in einer perspektivischen Ansicht von oben dargestellt. Hier ist zu erkennen, dass die Trennkammer 2 durch einen IBC-Tank 10 zur Verfügung gestellt wird, wobei der obere Einlass 3 des IBC-Tanks 10 den Einlass 3 für die Trennkammer 2 zur Verfügung stellt.

In dem hier gezeigten Ausführungsbeispiel ist in dem oberen Bereich des IBC-Tanks 10 bzw. der Trennkammer 2 eine große Öffnung 11 eingebracht, über welche die in der Trennkammer 2 aufgefangen Schaumstoffwürfel 52 wieder aus der Trennkammer 2 entfernt werden können. Damit beim Betrieb keine Schaumstoffwürfel 52 durch diese Öffnung 11 herausfallen können, ist eine Abdeckeinrichtung 25 vorgesehen, welche hier durch ein klappbares Gitter 22 zur Verfügung gestellt wird. Dieses Gitter 22 ist insbesondere dann vorteilhaft, wenn der Tank 101 der Wasseraufbereitungsanlage 100 restentleert werden soll und auch das Wasser aus dem Tank 101 komplett abgelassen wird. Die restlichen Schaumstoffwürfel 52 können beispielsweise mittels eines Gebläses aus dem Tank 101 in die Trennkammer 2 eingeblasen werden.

In Figur 4 ist eine Variante einer Siebeinrichtung 5 in einer Seitenansicht mit zwei perspektivischen Vergrößerungen dargestellt.

Hier sieht man, dass die Siebeinrichtung 5 ein Siebrohr 7 mit einer Vielzahl von Öffnungen 6 aufweist, wobei der Querschnitt der Sieböffnungen 6 an den Querschnitt der Schaumstoffwürfel 52 angepasst ist.

Das dem Auslass entgegengesetzte Ende der Siebeinrichtung 5 bzw. des Siebrohrs 7 erkennt man, dass dort auch wenigstens eine Sieböffnung 6 vorgesehen sein kann.

An dem Ende der Siebeinrichtung, welche im Bereich des Auslasses 4 ist, ist hier eine große Öffnung vorgesehen, über welche die Flüssigkeit 53 zurück in den Tanks 101 der Wasseraufbereitungsanlage 100 fließen kann.

Zudem ist hier eine Schraubhülse bzw. eine Hülse 23 mit einem Gewinde vorgesehen, um die Filtereinrichtung 5 an dem Auslass 4 der Trennkammer 2 festzuschrauben.

Durch die Ausgestaltung der Siebeinrichtung 5 als Siebrohr 7 wird es insbesondere möglich, die Siebeinrichtung 5 von außen in die Trennkammer 2 einzuschieben und von außen mit dieser zu verschrauben. So wird es dann auch möglich, die Siebeinrichtung 5 von außen wieder zu entnehmen, z. B. wenn das Aufnahmevolumen der Trennkammer 2 mit Filterschwämmen bzw. Schaumstoffwürfeln 52 vollständig gefüllt ist. Dann können die Filtereinrichtung 5 und je nach Ausgestaltung auch das Einlasselement 14 entnommen werden und in die nächste Trennkammer 2 eingesetzt werden, sodass nicht jede Trennkammer 2 mit einer eigenen Siebeinrichtung 5 ausgestattet sein muss.

Die entnehmbare Ausgestaltung von Siebeinrichtung 5 und Einlasselement 14 sind auch für den Transport und/oder die Installation der Trennvorrichtung 1 vorteilhaft.

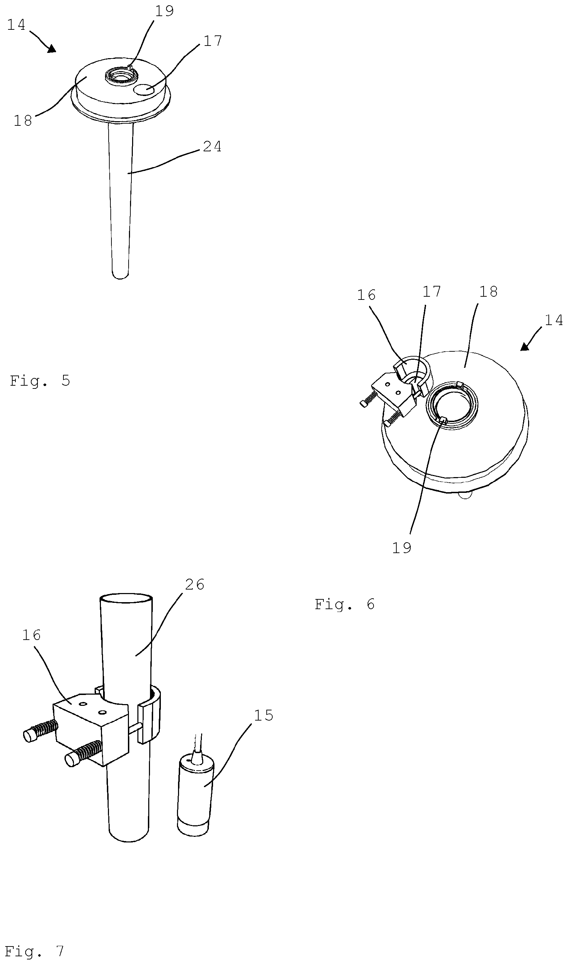

In Figur 5 ist rein schematisch ein Einlasselement 14 in einer perspektivischen Ansicht dargestellt. Auch hier erkennt man die Kupplung 19 zum Anschluss eines Schlauches in dem Deckel 18, welcher ein Gewinde aufweist und mit dem Einlass 3 der Trennkammer 2 verschraubt werden kann. Das Einlasselement 14 umfasst in der hier gezeigten Ausführung eine rohrartige Struktur 24 bzw. ein Rohr, über welches das Feststoff-Flüssigkeits-Gemisch 50 mit einem gewissen Abstand zum Einlass 3 eingefüllt wird.

Weiter ist zu erkennen, dass eine Öffnung 17 in dem Deckel 18 vorgesehen ist, über welche hier ein Füllstandsensor 15 in den IBC-Tank 10 bzw. in die Trennkammer 2 eingehängt werden kann.

Dabei sind Figuren 6 und 7 dargestellt, wie der Füllstandsensor 17 mit dem Einlasselement 14 in dem gezeigten Ausführungsbeispiel verbunden ist, sodass dieser bei der Demontage des Einlasselements 14 schnell und einfach wieder entnommen werden kann.

Dazu ist an der Öffnung 17 in den Deckel 18 eine Halteeinrichtung 16 angeordnet, welche in dem gezeigten Ausführungsbeispiel mit einer Feder vorbelastet ist. So kann die Halteeinrichtung 16 auseinandergezogen werden, wobei hier ein Rohr 26 dann in der Halteeinrichtung 16 festgeklemmt werden kann. Durch dieses Rohr 26 kann der Füllstandsensor 15 bis an eine geeignete Position in dem IBC-Tank 10 bzw. in der Trennkammer 2 eingelassen werden. Dabei verbleibt der Füllstandsensor 15 vorzugsweise innerhalb des Rohres 26, sodass dieser beispielsweise nicht durch beim Einfüllen hochspringende Schaumstoffwürfel 52 ausgelöst werden kann, ohne dass ein vorbestimmter Füllstand erreicht ist.

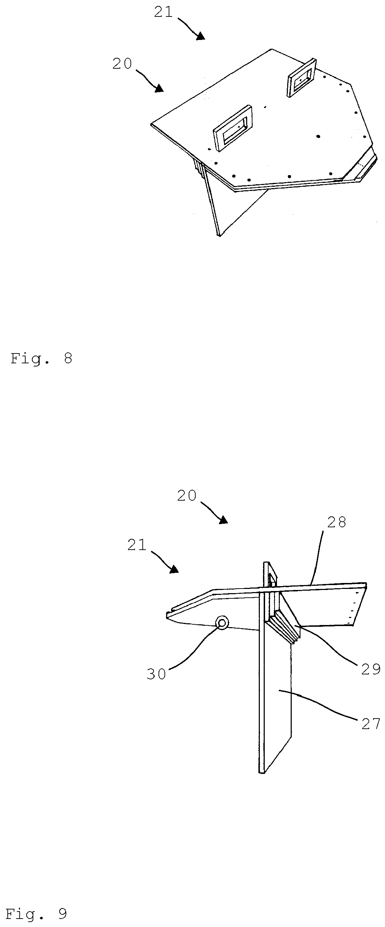

In Figur 8 und 9 ist die Plattform 20 bzw. das IBC-Desk 21 in einer perspektivischen Seitenansicht und einer perspektivischen Ansicht von oben rein schematisch dargestellt.

Dabei ist die Plattform 20 derart ausgebildet, dass diese insbesondere in Verbindung mit einem IBC-Tank 10 als Plattform 20 benutzt werden kann. Dazu umfasst die Plattform 20 eine im installierten Zustand im Wesentlichen vertikale Platte 27 und einem Wesentlichen horizontale Platte 28. Diese Platten 27, 28 stützen sich jeweils gegen den Plastiktank und das Gestänge des IBC-Tanks 10 ab.

Im oberen Bereich ist noch eine schräge Fläche 29 vorgesehen, welche an die Formgebung des Plastiktanks des IBC-Tanks 10 angepasst ist.

An der Plattform 20 können verschiedene Befestigungselemente vorgesehen sein, beispielsweise ist hier eine Öse 30 vorgesehen, an welche eine Pumpe beispielsweise mit einem Flaschenzug angehängt werden kann. Im oberen Bereich können Griffe vorgesehen sein oder auch Befestigungselemente zum Befestigen der Steuereinrichtung.

**Bezugszeichenliste:**

| | | | |
|---|---|---|---|
| 1 | Trennvorrichtung | 51 | Feststoff |
| 2 | Trennkammer | 52 | Schaumstoffwürfel |
| 3 | Einlass | 53 | Flüssigkeit |
| 4 | Auslass | 100 | Wasseraufbereitungsanlage |
| 5 | Siebeinrichtung | 101 | Tank/Schacht |
| 6 | Sieböffnung | 200 | Portalwaschanlage |
| 7 | Siebrohr | 201 | Waschbereich |
| 8 | Querschnitt | 202 | Bürste |
| 9 | Pumpeneinrichtung | 203 | Technikhaus |
| 10 | IBC-Tank | 204 | Schacht/Tank |
| 11 | Öffnung | 205 | Schlammfang |
| 12 | Presseinrichtung | 206 | Überlauf |
| 13 | Steuereinrichtung | 207 | Lüfterkreuz |
| 14 | Einlasselement | | |
| 15 | Füllstandsensor | | |
| 16 | Halteeinrichtung | | |
| 17 | Öffnung | | |
| 18 | Deckel | | |
| 19 | Kupplung | | |
| 20 | Plattform | | |
| 21 | IBC-Desk | | |
| 22 | Gitter | | |
| 23 | Hülse | | |
| 24 | rohrartige Struktur | | |
| 25 | Abdeckeinrichtung | | |
| 26 | Rohr | | |
| 27 | Platte | | |
| 28 | Platte | | |
| 29 | Schräge | | |
| 30 | Öse | | |
| 50 | Feststoff-Flüssigkeits-Gemisch | | |

## Patentansprüche

1. Trennvorrichtung (1) zur Entnahme von einem Feststoff-Flüssigkeits-Gemisch (50) aus dem Tank (101) einer Wasseraufbereitungsanlage (100), insbesondere einer biologischen Wasseraufbereitungsanlage (100), und zum Trennen von Feststoffen (51) aus dem Feststoff-Flüssigkeits-Gemisch (50), wobei die Feststoffe (51) Schaumstoffwürfel (52) und/oder andere Stoffe zur Oberflächenmaximierung umfassen, umfassend wenigstens eine Trennkammer (2) zur Aufnahme von einem vorbestimmten Volumen von dem zu trennenden Feststoff-Flüssigkeits-Gemisch (50) mit wenigstens einem Einlass (3), über welchen das zu trennende Feststoff-Flüssigkeits-Gemisch (50) der Trennkammer (2) zuführbar ist und wobei die Trennkammer (2) wenigstens einen Auslass (4) umfasst, über welchen Flüssigkeit (52) des Feststoff-Flüssigkeits-Gemischs (50) ablassbar ist,
**dadurch gekennzeichnet,**
**dass** wenigstens eine Pumpeneinrichtung (9) vorgesehen ist, welche dazu geeignet und ausgebildet ist, das Feststoff-Flüssigkeits-Gemisch (50) aus dem Tank (101) in die Trennammer (2) zu fördern und dass dem Auslass (4) wenigstens eine Siebeinrichtung (5) mit wenigstens einer Sieböffnung (6) zugeordnet ist, welche die Feststoffe (51) in der Trennkammer (2) zurückhält.

2. Trennvorrichtung (1) nach Anspruch 1, wobei die Siebeinrichtung (5) wenigstens abschnittsweise innerhalb der Trennkammer (2) angeordnet ist.

3. Trennvorrichtung (1) nach einem der vorhergehenden Ansprüche, wobei die Siebeinrichtung (5) wenigstens ein Siebrohr (7) umfasst.

4. Trennvorrichtung (1) nach einem der vorhergehenden Ansprüche, wobei die Siebeinrichtung (5) dazu geeignet und ausgebildet ist, in und/oder an den Auslass (4) gesteckt, geschraubt, gekliptst, geklebt oder anders damit verbunden zu werden und/oder wobei der Querschnitt (8) der Sieböffnung (6) an die Ausmaße der zu trennenden Feststoffe (51) angepasst ist.

5. Trennvorrichtung (1) nach einem der vorhergehenden Ansprüche, wobei dem Einlass (3) wenigstens ein Einlasselement (14) zugeordnet ist.

6. Trennvorrichtung (1) nach einem der vorhergehenden Ansprüche, wobei wenigstens ein Füllstandsensor (15) vorgesehen ist.

7. Trennvorrichtung (1) nach dem vorhergehenden Anspruch, wobei wenigstens eine Haltereinrichtung (16) für Füllstandsensor (15), insbesondere eine vorbelastete Halteeinrichtung (16), vorgesehen ist, wobei das Einlasselement (14) insbesondere eine Öffnung (17) für den Füllstandsensor (15) aufweist, wobei die Halteeinrichtung (16) an der Öffnung (17) angeordnet ist.

8. Trennvorrichtung (1) nach einem der vorhergehenden Ansprüche, wobei die Trennkammer (2) durch wenigstens einen IBC-Tank (10) oder dergleichen zur Verfügung gestellt wird.

9. Trennvorrichtung (1) nach einem der vorhergehenden Ansprüche, wobei die Trennkammer (2) wenigstens eine Öffnung (11) zum Entnehmen der Feststoffe (51) umfasst.

10. Trennvorrichtung (1) nach einem der vorhergehenden Ansprüche, wobei eine mobile Ausgestaltung vorgesehen ist.

11. Trennvorrichtung (1) nach einem der vorhergehenden Ansprüche, wobei wenigstens Presseinrichtung (12) vorgesehen ist und/oder wobei wenigstens eine Steuereinrichtung (13) vorgesehen ist.

12. Verfahren zum Trennen von Feststoffen (51) aus einem Feststoff-Flüssigkeits-Gemisch (50) aus einem Tank (101) einer Wasseraufbereitungsanlage (100), insbesondere einer biologische Wasseraufbereitungsanlage, mit wenigstens einer Trennvorrichtung (1) nach einem der vorhergehenden Ansprüche,
**gekennzeichnet durch** die folgenden Schritte:
- Entnahme von zu trennendem Feststoff-Flüssigkeits-Gemisch (50) aus dem Tank (101) der Wasseraufbereitungsanlage (100) und Zuführen des Feststoff-Flüssigkeits-Gemisch (50) in die Trennkammer (2) über den Einlass (3)
- Rückführung der mittels der Siebeinrichtung (5) abgetrennten Flüssigkeit (53) über den Auslass (4) der Trennkammer (2) in den Tank (101) der Wasseraufbereitungsanlage (100).

13. Verfahren nach dem vorhergehenden Anspruch, wobei das Zuführen von dem Feststoff-Flüssigkeits-Gemisch (50) mittels wenigstens einer Pumpeneinrichtung (9) erfolgt, wobei insbesondere der folgende Schritt an geeigneter Stelle vorgesehen ist:
- Höhenjustierung der Pumpeneinrichtung (9) in dem Tank (101, 201, 301).

14. Verfahren nach einem der beiden vorhergehenden Ansprüche, wobei wenigstens einer der nachfolgenden Schritte an geeigneter Stelle in vorgesehen ist:
- Entnehmen der Siebeinrichtung (5) und/oder des Einlasselements (14) aus einer gefüllten Trennkammer (2)
- Vorbereiten einer neunen Trennkammer (2)
- Einsetzen der Siebeinrichtung (5) und/oder des Einlasselements (14).

15. Verwendung einer Trennvorrichtung (1) nach wenigstens einem der Ansprüche 1 bis 14 für das Trennen von Feststoffen (50) bzw. von Schaumstoffwürfeln (52) und/oder anderen Stoffen zur Oberflächenmaximierung aus dem Feststoff-Flüssigkeits-Gemisch (50) aus dem Tank (301) einer biologischen Wasseraufbereitungsanlage (300), wobei die Schaumstoffwürfel (52) in der Trennkammer (2) durch die Siebeinrichtung (5) zurückgehalten werden und wobei die Flüssigkeit (53) wenigstens teilweise und wenigstens zeitweise über den Auslass (4) in den Tank (301) zurückgeführt wird.
